# EUROPÄISCHE PATENTANMELDUNG

(11) **EP 3 249 064 A1**
(43) Veröffentlichungstag der Anmeldung: **29.11.2017**
(21) Anmeldenummer: 16170798.9
(22) Anmeldetag: 23.05.2016
(51) Int. Cl.: C22C 21/00, B22F 3/12, B23K 26/34

(54) **ADDITIVE FERTIGUNG VON HOCHTEMPERATURBAUTEILEN AUS TIAL**

(71) Anmelder: MTU Aero Engines AG, 80995 München (DE)
(72) Erfinder: Schloffer, Martin, 81247 München (DE); Smarsly, Wilfried, 81669 München (DE)

(57) **Zusammenfassung**

Die Erfindung betrifft ein Verfahren zur Herstellung eines Bauteils aus einer TiA1 - Legierung durch lageweise Abscheidung von Pulver auf einem Substrat und/oder einem bereits hergestellten Halbzeug, wobei das Bauteil einen Anteil von x At.% Aluminium aufweist, der im Bereich von 34 bis 47 At.% Aluminium liegt, wobei das Pulver einen Anteil von x+1 At.% bis x+6 At.%, vorzugsweise von x+2 At.% bis x+6 At.%, Aluminium aufweist. Ferner betrifft die Erfindung ein Bauteil aus einer TiA1 - Legierung, das mit einem entsprechenden Verfahren hergestellt worden ist.

## Beschreibung

### GEBIET DER ERFINDUNG

Die vorliegende Erfindung betrifft ein Verfahren zur Herstellung eines Bauteils aus einer TiAl - Legierung durch lageweises Abscheiden von Pulver auf einem Substrat und/oder einem bereits hergestellten Halbzeug, wobei das Bauteil vorzugsweise für Hochtemperaturanwendungen in Strömungsmaschinen, wie Flugtriebwerken eingesetzt werden soll. Außerdem betrifft die vorliegende Erfindung ein entsprechendes Bauteil und ein Pulver aus einer TiAl - Legierung zur Verwendung in dem Herstellungsverfahren für das entsprechende Bauteil.

### STAND DER TECHNNIK

Titanaluminide und TiAl - Legierungen, die zu einem Großteil intermetallische Verbindungen in Form von Titanaluminiden aufweisen, sind wegen ihres geringen spezifischen Gewichts und ihrer hohen Festigkeit insbesondere auch bei hohen Einsatztemperaturen aufgrund des geordneten atomaren Aufbaus der intermetallischen Verbindungen für den Einsatz bei Strömungsmaschinen, wie stationären Gasturbinen und Flugtriebwerken, interessant. Entsprechend sind aus dem Stand der Technik bereits eine Vielzahl von TiAl - Legierungen für die Verwendung bei Bauteilen von Strömungsmaschinen und insbesondere stationären Gasturbinen oder Flugtriebwerken bekannt. Insbesondere ist auch die Verwendung als Werkstoff für Turbinenschaufeln im Stand der Technik bereits beschrieben.

Derartige Bauteile aus TiAl bzw. TiAl - Legierungen werden üblicherweise durch Gießen, insbesondere Feingießen, sowie durch Umformen durch Schmieden hergestellt.

Darüber hinaus ist es auch bekannt, Bauteile aus TiAl bzw. TiAl - Legierungen durch generative oder additive Verfahren herzustellen, bei denen die Bauteile durch lageweises Abscheiden aus Pulver hergestellt werden. Die Pulverpartikel können durch selektives Verschmelzen oder Sintern mittels hochenergetischer Strahlen, wie Elektronenstrahlen oder Laserstrahlen entsprechend der Querschnittsform des herzustellenden Bauteils in der jeweiligen Lage miteinander und mit der darunter angeordneten Lage verbunden werden. Beispiele hierfür sind in der EP 1 878 522 A1 oder der US 2014/0037983 A1 beschrieben.

Um defektfreie Bauteile, insbesondere ohne Poren und dergleichen zu erhalten, beschreibt die US 2014/0037983 A1 eine Kompaktierung eines generativ oder additiv hergestellten Bauteils aus TiAl - Legierungen, wobei das Bauteil mit einer aluminiumhaltigen Kapselschicht versehen wird, die aus einer MCrAlY - Schicht mit M gleich Kobalt oder Nickel oder einer Kombination aus Kobalt und Nickel oder einer TiAlCr - Schicht gebildet ist.

Die europäische Offenlegungsschrift EP 1 878 522 A1 wiederum beschreibt ein Verfahren zur Massenproduktion von Bauteilen aus intermetallischen Verbindungen durch Elektronenstrahlschmelzen, bei dem TiAl - Pulver, das die gleiche chemische Zusammensetzung, wie das endgültig hergestellte Bauteil aufweist, für die additive bzw. generative Herstellung mittels Elektronenstrahlschmelzen eingesetzt wird.

### OFFENBARUNG DER ERFINDUNG

### AUFGABE DER ERFINDUNG

Allerdings besteht bei der generativen bzw. additiven Fertigung von Bauteilen aus TiAl und TiAl - Legierungen weiterer Optimierungsbedarf, da die üblicherweise verwendeten TiAl - Werkstoffe für gießtechnische Herstellungsprozesse oder für die Umformung durch Schmieden entwickelt und optimiert wurden, sodass beim Schmelzen und raschen Erstarren des Pulvers bei der additiven Herstellung Erstarrungstexturen und somit Anisotropien in den mechanischen Eigenschaften auftreten können. Darüber hinaus besteht die Problematik einer Variation in der chemischen Zusammensetzung über das hergestellte Bauteil und einer entsprechenden Inhomogenität der Eigenschaften. Entsprechend sollen derartige Probleme vermieden oder minimiert werden und eine generative Herstellung von Bauteilen aus TiAl - Werkstoffen ermöglicht werden, wobei die hergestellten Bauteile eine homogene Mikrostruktur und entsprechend gleichmäßige Eigenschaften über das gesamte Bauteil aufweisen sollen. Darüber hinaus soll eine defektfreie Herstellung der Bauteile in effektiver Weise möglich sein.

### TECHNISCHE LÖSUNG

Diese Aufgabe wird gelöst durch ein Verfahren mit den Merkmalen des Anspruchs 1 sowie ein Bauteil mit den Merkmalen des Anspruchs 9 und ein Pulver aus einer TiAl - Legierung mit den Merkmalen des Anspruchs 13 zur Verwendung im Verfahren nach Anspruch 1. Vorteilhafte Ausgestaltungen sind Gegenstand der abhängigen Ansprüche.

Die vorliegende Erfindung schlägt zunächst nach einem ersten Aspekt der vorliegenden Erfindung ein Verfahren zur Herstellung eines Bauteils aus einer TiAl - Legierung durch lageweises Abscheiden von Pulver auf einem Substrat und/oder auf einem bereits hergestellten Halbzeug vor, bei dem der Aluminiumgehalt des verwendeten Pulvers gegenüber dem angestrebten Aluminiumanteil in dem fertiggestellten Bauteil erhöht ist. Durch eine Erhöhung des Aluminiumanteils kann zum einen dem Problem des Abdampfens von Aluminium beim Aufschmelzen des Pulvers entgegengewirkt werden und zum anderen kann eine günstige Erstarrung mit der Ausbildung einer feinen Mikrostruktur ohne unerwünschter Textur erreicht werden. Erfindungsgemäß liegt der Aluminiumanteil des zur Abscheidung verwendeten Pulvers um 1 bis 6 At.%, vorzugsweise um 2 bis 6 At. %, über dem Anteil des Aluminiums, der für das fertiggestellte Bauteil angestrebt ist, wobei der Anteil von Aluminium des fertiggestellten Bauteils im Bereich von 34 bis 47 At.% liegt.

Entsprechend wird bei der Verwendung eines Pulvergemisches aus Elementpulvern oder Vorlegierungen oder eines Pulvers aus einem TiAl - Werkstoff die chemische Zusammensetzung des Pulvergemisches oder des TiAl - Werkstoffs so gegenüber der gewünschten Zielzusammensetzung des Bauteils verändert, dass der Aluminiumanteil um 1 bis 6 At.% erhöht wird.

Bei dem Verfahren kann die lageweise Abscheidung bzw. die Verbindung der Pulverpartikel in den entsprechenden Lagen untereinander und/oder mit einer darunter bereits abgeschiedenen Lage durch Aufschmelzen des Pulvers entsprechend der Querschnittsform des herzustellenden Bauteils in der entsprechenden Lage erfolgen, und zwar durch einen energiereichen Strahl, wie einen Laserstrahl oder vorzugsweise einen Elektronenstrahl. Indem für das erfindungsgemäße Verfahren als Ausgangsmaterial ein Pulver verwendet wird, dessen Aluminiumanteil 1 bis 6 At.%, vorzugsweise 2 bis 6 At. %, über dem Aluminiumanteil des angestrebten Bauteils liegt, kann bei der Herstellung des Bauteils eine höhere Engergieeinbringrate verwendet werden, ohne dass unerwünschte Anisotropien in den mechanischen Eigenschaften durch das erhöhte Abdampfen von Aluminium beim Energieeintrag am Bauteil entstehen. Auf diese Weise kann die Herstellung schneller erfolgen und der Herstellprozess wirtschaftlicher betrieben werden. Insbesondere wird vorgeschlagen, dass die Prozessparameter beim Aufschmelzen der lageweisen Abscheidung so gewählt werden, dass eine gezielte Abdampfung von Aluminium in der Größenordnung von 1 At. % bis 6 At. %, vorzugsweise von 2 At. % bis 6 At.%, erfolgt. Die Einstellung der entsprechenden Prozessparameter kann von einem Fachmann auf einfache Weise durch Versuche und/oder Simulation bestimmt werden. Dabei werden die Prozessparameter vorzugsweise so eingestellt, dass die Abdampfung des Aluminiums im Rahmen des zuvor genannten Wertebereichs bei einem im Wesentlichen über den gesamten Herstellprozess des Bauteils konstanten Wert erfolgt, und zwar vorzugsweise genau bei dem Wert, um welchen der Aluminiumanteil des Pulvers gegenüber dem gewünschten Aluminiumanteil des Bauteils erhöht ist.

Während im bekannten Stand der Technik versucht wird, durch eine niedrige Energieeintragungsrate die Abdampfung von Aluminium im Pulver möglichst gering zu halten, insbesondere darauf geachtet wird, die Abdampfung von Aluminium kleiner als 1 At. % zu halten, geht die vorliegende Erfindung von einem anderen Ansatz aus. Gemäß der vorliegenden Erfindung wird der abdampfende Aluminiumanteil im Pulver gezielt vorgehalten, um trotz einer hohen Energieeinbringrate und entsprechend hoher Alumiumabdampfung von mehr als 1 At. % Al, vorzugsweise mehr als 2 At. % Al, ein Bauteil mit der gewünschten Materialzusammensetzung und ohne unerwünschte Anisotropien hinsichtlich seiner mechanischen Eigenschaften herstellen zu können.

Obwohl dieser Lösungsansatz im Nachhinein simpel anmuten mag, ist das eingangs beschriebene Problem auf diese Weise in der Fachwelt bisher noch nicht gelöst worden. Derartig hohe Alumiumabdampfungen beim generativen Herstellungsprozess von Bauteilen aus TiAl - Legierung wurden nicht akzeptiert, bzw. wurden die Energieeinbringungsraten stets entsprechend niedrig gewählt.

Das Pulver kann vorteilhafterweise so gewählt werden, dass zumindest teilweise eine peritektische Erstarrung stattfindet, also im Erstarrungsprozess β - Titan - Phase zusammen mit schmelzflüssiger Phase vorliegt, die in α - Titan - Phase umgewandelt werden.

Entsprechend kann das Pulver aus einer TiAl - Legierung gebildet sein, die 35 bis 53 At.% Aluminium umfasst, um die zumindest teilweise peritektische Erstarrung zu ermöglichen. Darüber hinaus kann die TiAl - Legierung, die mittels des Pulvers lageweise aufgeschmolzen wird, um danach in der entsprechenden Lage zu erstarren, weiterhin Niob, Molybdän und/oder Wolfram, wahlweise Zirkon, wahlweise Silizium und wahlweise Kohlenstoff und als Rest Titan und unvermeidbare Verunreinigungen umfassen.

Das Silizium und der Kohlenstoff verbessern bei der zumindest teilweise peritektischen Erstarrung die Ausbildung eines feinen Erstarrungsgefüges und die Vermeidung einer Textur durch die Ausscheidung von siliziumhaltigen und/oder kohlenstoffhaltigen Ausscheidungen, insbesondere Siliziden und/oder Karbiden, die auch das Kornwachstum beim weiteren Abkühlen des erstarrten Materials, welches zunächst als α - Titan - Phase vorliegt, verhindern. Die die β - Phase stabilisierenden Elemente Nb, W und Mo ermöglichen eine verstärkte peritektische Erstarrung und sorgen bei der Ausbildung der sich bei der weiteren Abkühlung entstehenden y - Lamellen für die Bildung von feinen Ausscheidungen der β - Titan - Phase in den y - Lamellen, was die Kriechbeständigkeit des entsprechend hergestellten Bauteils positiv beeinflusst.

Entsprechend wird nach einem weiteren Aspekt der vorliegenden Erfindung, für den selbstständig und in Kombination mit anderen Merkmalen der Erfindung Schutz begehrt wird, ein Pulvermaterial bereitgestellt, das aus einer TiAl - Legierung gebildet ist, die eine chemische Zusammensetzung mit 35 bis 53 At.%, insbesondere 48 bis 51 At.%, vorzugsweise 49 bis 51 At.% Aluminium, 6 bis 11 At.%, insbesondere 7 bis 9 At.%, vorzugsweise 8 bis 9 At.% Niob, 0,1 bis 5 At.% Molybdän und/oder 0,1 bis 2 At.% Wolfram, 0 bis 4 At.% Zirkon, 0 bis 4 At.%, insbesondere 1 bis 4 At.%, vorzugsweise 2 bis 4 At.% Silizium und 0 bis 1 At.% Kohlenstoff, insbesondere 0,4 bis 0,5 At.% Kohlenstoff sowie Rest Titan und unvermeidbaren Verunreinigungen aufweist bzw. aus dieser besteht.

Es ist besonders bevorzugt, wenn das Pulver eine chemische Zusammensetzung aufweist mit entweder 35 bis 45 At.% Aluminium, 6 bis 11 At.% Niob, 3 bis 5 At.% Molybdän und/oder 0,6 bis 2 At.% Wolfram, 0 bis 4 At.% Zirkon, 0 bis 4 At.% Silizium sowie Rest Titan und unvermeidbaren Verunreinigungen; oder 45 bis 53 At.% Aluminium, 6 bis 9 At.% Niob, 0,1 bis 1 At.% Molybdän, 0,1 bis 2 At.% Wolfram, 0,1 bis 4 At.% Zirkon, 0,5 bis 4 At.% Silizium, 0,4 bis 1 At.% Kohlenstoff sowie Rest Titan und unvermeidbaren Verunreinigungen.

Damit ist eine Zusammensetzung gegeben, die beim Elektronenstrahlschmelzen (EBM Electron Beam Melting) einer dünnen Pulverschicht und deren Erstarrung eine vollständig lamellare Mikrostruktur ausbilden kann und deren Lamellen überwiegend aus y - TiAl gebildet sind. An den lamellaren Grenzflächen der y - Lamellen können sich viele Silizide und Karbide ausbilden, während in den y - Lamellen selbst feine β - Titan - Ausscheidungen ausgebildet werden können. Dadurch ergibt sich eine insgesamt feinkörnige, homogene Mikrostruktur, bei der die Korngrößen der y - Lamellen - Kolonien klein gehalten werden können, wodurch die Festigkeit und Duktilität günstig beeinflusst werden.

Bei dem Verfahren können das bereits hergestellte Halbzeug und/oder das Pulver auf eine Temperatur zwischen 1000° C und 1150° C vorgeheizt werden, wodurch eine langsame Abkühlung und/oder eine Auslagerung in diesem Temperaturbereich gewährleistet werden, die eine Umwandlung von α - Titan - Phase in y - TiAl nahe dem thermodynamischen Gleichgewicht während der Abkühlung und/oder der Auslagerung in diesem Temperaturbereich ermöglicht. Außerdem ermöglicht die langsame Abkühlung beziehungsweise das Halten bei der Vorheiztemperatur von 1000° C bis 1150° C die Ausscheidung der Silizide und Karbide.

Ein entsprechend generativ hergestelltes Bauteil kann abschließend bei Temperaturen von 1200° C bis 1300° C und bei Drücken von 100 MPa bis 200 MPa für 2 bis 8 Stunden heißisostatisch gepresst werden, um es zu verdichten, um grobe Carbide aufzulösen und mögliche Poren zu beseitigen, wobei neben dem heißisostatischen Pressen keine weiteren zusätzlichen Hochtemperaturwärmebehandlungen durchgeführt werden müssen, wenn im Bauteil beim Abkühlen von der Temperatur, bei der das heißisostatische Pressen durchgeführt wird, γ-Lamellen mit Breiten von 25 nm bis 250 nm eingestellt werden.

Durch eine abschließende Auslagerungsglühung mit einer Haltezeit von 1 Stunde bis 100 Stunden bei Temperaturen von 900°C und 1000°C kann das Gefüge jedoch vorteilhaft stabilisiert und das Bauteil mechanisch besser bearbeitet werden.

Entsprechend wird nach einem weiteren Aspekt der Erfindung, für den selbstständig und in Kombination mit anderen Aspekten der Erfindung Schutz begehrt wird, ein Bauteil beansprucht, welches mit dem beschriebenen Verfahren, vorzugsweise unter Einsatz des oben beschriebenen Pulvermaterials hergestellt worden ist.

Ein entsprechendes Bauteil, insbesondere ein Bauteil von Strömungsmaschinen für Hochtemperaturanwendungen, insbesondere eine Schaufel, ist aus einer Legierung gebildet, die eine chemische Zusammensetzung mit 34 bis 47 At.%, 6 bis 11 At.%, insbesondere 7 bis 9 At.%, vorzugsweise 8 bis 9 At.% Niob, 0,1 bis 5 At.% Molybdän und/oder 0,1 bis 2 At.% Wolfram, 0 bis 4 At.% Zirkon, 0 bis 4 At.%, insbesondere 1 bis 4 At.%, vorzugsweise 2 bis 4 At.% Silizium, 0 bis 1 At.% insbesondere 0,4 bis 0,5 At.% Kohlenstoff sowie Rest Titan und unvermeidbare Verunreinigungen aufweist bzw. aus dieser besteht. Es ist besonders bevorzugt, wenn das Bauteil eine chemische Zusammensetzung aufweist mit entweder 34 bis 39 At.% Aluminium, 6 bis 11 At.% Niob, 3 bis 5 At.% Molybdän und/oder 0,6 bis 2 At.% Wolfram, 0 bis 4 At.% Zirkon, 0 bis 4 At.% Silizium sowie Rest Titan und unvermeidbaren Verunreinigungen; oder 43 bis 47 At.% Aluminium, 6 bis 9 At.% Niob, 0,1 bis 1 At.% Molybdän, 0,1 bis 2 At.% Wolfram, 0,1 bis 4 At.% Zirkon, 0,5 bis 4 At.% Silizium, 0,4 bis 1 At.% Kohlenstoff sowie Rest Titan und unvermeidbaren Verunreinigungen.

Ein entsprechendes Bauteil kann eine überwiegend lamellare Mikrostruktur, insbesondere eine Lamellenstruktur in mehr als 75 Vol.%, vorzugsweise mehr als 90 Vol.% des Bauteils aufweisen. Die lamellare Mikrostruktur besteht bevorzugt aus γ- und α-Lamellen. Weiterhin bevorzugt besteht der Rest des Bauteils, d.h. bis zu maximal 25 Vol.% des Bauteils, überwiegend aus globularen γ- und β-Ausscheidungen, welche weiter bevorzugt in einer Größenordnung von kleiner als 15 µm liegen.

Das Gefüge des Bauteils kann weiterhin siliziumhaltige und kohlenstoffhaltige Ausscheidungen beziehungsweise Silizide und Karbide vorzugsweise an den lamellaren Grenzflächen aufweisen. Vorzugsweise weist das Gefüge verschiedene Silizide und Karbide auf.

### DEFINITIONEN

Unter TiAl - Legierung beziehungsweise TiAl - Werkstoff wird bei der vorliegenden Erfindung eine Legierung verstanden, die überwiegend aus Titan und Aluminium gebildet ist, also deren Hauptbestandteile Titan und Aluminium sind, d.h. die größten mengengmäßigen Anteile der Legierung in Atom - oder Gewichtsprozent sind Titan und Aluminium. Darüber hinaus weisen die Legierungen oder Werkstoffe intermetallische Verbindungen in Form von y - TiAl auf.

## Patentansprüche

1. Verfahren zur Herstellung eines Bauteils aus einer TiAl - Legierung durch lageweise Abscheidung von Pulver auf einem Substrat und/oder einem bereits hergestellten Halbzeug, wobei das Bauteil einen Anteil von x At.% Aluminium aufweist, der im Bereich von 34 bis 47 At.% Aluminium liegt,
**dadurch gekennzeichnet, dass**
das Pulver einen Anteil von x+1 At.% bis x+6 At.%, vorzugsweise von x+2 At.% bis x+6 At.%, Aluminium aufweist.

2. Verfahren nach Anspruch 1,
**dadurch gekennzeichnet, dass**
das Pulver bei der lageweisen Abscheidung aufgeschmolzen wird, insbesondere durch einen energiereichen Strahl.

3. Verfahren nach Anspruch 2,
**dadurch gekennzeichnet, dass**
die lageweise Abscheidung durch Elektronenstrahlschmelzen (EBM electron beam melting) oder Laserstrahlschmelzen erfolgt.

4. Verfahren nach einem der vorhergehenden Ansprüche,
**dadurch gekennzeichnet, dass**
das Pulver eine chemische Zusammensetzung aufweist, die eine zumindest teilweise peritektische Erstarrung von aufgeschmolzenem Pulver ermöglicht.

5. Verfahren nach einem der vorhergehenden Ansprüche,
**dadurch gekennzeichnet, dass**
das Pulver aus einer TiAl - Legierung gebildet ist, die 35 bis 53 At.% Aluminium, Niob, Molybdän und/oder Wolfram, wahlweise Zirkon, wahlweise Silizium und wahlweise Kohlenstoff sowie Rest Titan und unvermeidbare Verunreinigungen umfasst.

6. Verfahren nach einem der vorhergehenden Ansprüche,
**dadurch gekennzeichnet, dass**
das Pulver aus einer TiAl - Legierung gebildet ist, die 35 bis 53 At.% Aluminium, 6 bis 11 At.% Niob, 0,1 bis 5 At.% Molybdän und/oder 0,1 bis 2 At.% Wolfram, 0 bis 4 At.% Zirkon, 0 bis 4 At.% Silizium und 0, bis 1 At.% Kohlenstoff sowie Rest Titan und unvermeidbare Verunreinigungen aufweist.

7. Verfahren nach einem der vorhergehenden Ansprüche,
**dadurch gekennzeichnet, dass**
das bereits hergestellte Halbzeug und/oder das Pulver auf eine Temperatur zwischen 1000°C und 1150°C vorgeheizt wird.

8. Verfahren nach einem der vorhergehenden Ansprüche,
**dadurch gekennzeichnet, dass**
nach dem lageweisen Aufbau des Bauteils das Bauteil heißisostatisch bei Temperaturen von 1200°C bis 1300°C und bei Drücken von 100 MPa bis 200 MPa für 2 bis 8 Stunden gepresst wird.

9. Bauteil aus einer TiAl - Legierung, das mit dem Verfahren nach einem der vorhergehenden Ansprüche hergestellt worden ist,
**dadurch gekennzeichnet, dass**
das Bauteil eine chemische Zusammensetzung mit 34 bis 47 At.% Aluminium, 6 bis 11 At.% Niob, 0,1 bis 5 At.% Molybdän und/oder 0,1 bis 2 At.% Wolfram, 0 bis 4 At.% Zirkon, 0 bis 4 At.% Silizium und 0 bis 1 At.% Kohlenstoff sowie Rest Titan und unvermeidbaren Verunreinigungen aufweist.

10. Bauteil nach Anspruch 9,
**dadurch gekennzeichnet, dass**
das Bauteil eine chemische Zusammensetzung aufweist mit:
entweder
34 bis 39 At.% Aluminium, 6 bis 11 At.% Niob, 3 bis 5 At.% Molybdän und/oder 0,6 bis 2 At.% Wolfram, 0 bis 4 At.% Zirkon, 0 bis 4 At.% Silizium sowie Rest Titan und unvermeidbaren Verunreinigungen;
oder
43 bis 47 At.% Aluminium, 6 bis 9 At.% Niob, 0,1 bis 1 At.% Molybdän, 0,1 bis 2 At.% Wolfram, 0,1 bis 4 At.% Zirkon, 0,5 bis 4 At.% Silizium, 0,4 bis 1 At.% Kohlenstoff sowie Rest Titan und unvermeidbaren Verunreinigungen.

11. Bauteil nach einem der Ansprüche 9 oder 10,
**dadurch gekennzeichnet, dass**
das Bauteil eine überwiegend lamellare Mikrostruktur aufweist, insbesondere eine Lamellenstruktur in mehr al 75 Vol.%, vorzugsweise mehr als 90 Vol.% des Bauteils.

12. Bauteil nach einem der Ansprüche 9 bis 11,
**dadurch gekennzeichnet, dass**
das Gefüge des Bauteils Si - haltige, C - haltige und Zr - haltige Ausscheidungen aufweist.

13. Pulver aus einer TiAl - Legierung für die Verwendung in einem Verfahren nach einem der Ansprüche 1 bis 8,
**dadurch gekennzeichnet, dass**
das Pulver eine chemische Zusammensetzung mit 35 bis 53 At.% Aluminium, 6 bis 11 At.% Niob, 0,1 bis 5 At.% Molybdän und/oder 0,1 bis 2 At.% Wolfram, 0 bis 4 At.% Zirkon, 0 bis 4 At.% Silizium und 0, bis 1 At.% Kohlenstoff sowie Rest Titan und unvermeidbaren Verunreinigungen aufweist.

14. Pulver nach Anspruch 13,
**dadurch gekennzeichnet, dass**
das Pulver eine chemische Zusammensetzung aufweist mit:
entweder
35 bis 45 At.% Aluminium, 6 bis 11 At.% Niob, 3 bis 5 At.% Molybdän und/oder 0,6 bis 2 At.% Wolfram, 0 bis 4 At.% Zirkon, 0 bis 4 At.% Silizium sowie Rest Titan und unvermeidbaren Verunreinigungen;
oder 45 bis 53 At.% Aluminium, 6 bis 9 At.% Niob, 0,1 bis 1 At.% Molybdän, 0,1 bis 2 At.% Wolfram, 0,1 bis 4 At.% Zirkon, 0,5 bis 4 At.% Silizium, 0,4 bis 1 At.% Kohlenstoff sowie Rest Titan und unvermeidbaren Verunreinigungen.
